# EUROPÄISCHE PATENTSCHRIFT

(11) **EP 0 627 541 B1**
(45) Veröffentlichungstag und Bekanntmachung des Hinweises auf die Patenterteilung: **18.12.1996**
(21) Anmeldenummer: 94100490.5
(22) Anmeldetag: 14.01.1994
(51) Int. Cl.: E06B 3/58, E06B 3/72

(54) **Verbindungselement zum Verbinden von parallel liegenden Profilleisten**
Connecting element for parallel section members
Elément de liaison pour profilés parallèles

(30) Priorität: 22.05.1993 DE 9307769 U; 19.10.1993 DE 9315923 U; 15.11.1993 DE 9317446 U
(43) Veröffentlichungstag der Anmeldung: 07.12.1994
(73) Patentinhaber: Kuhn, Günther, D-34396 Liebenau (DE)
(72) Erfinder: Kuhn, Günther, D-34396 Liebenau (DE)
(74) Vertreter: Walther, Robert, Dipl.-Ing.

(56) Entgegenhaltungen:
- EP-A- 0 297 497
- DE-C- 3 936 400

## Beschreibung

Die Erfindung betrifft ein Verbindungselement zum Verbinden von parallelliegenden Profilleisten, welche in einer Ebene liegende Teile einer Türfüllung halten, wobei die Türfüllung nach Art eines Sandwichbauelementes, mit zwei Platten, die durch eine weiche Isolierschicht verbunden sind, aufgebaut ist. Eine Türfüllung ist häufig nicht nur als durchgängiges, glattes Element aufgebaut, sondern besitzt darüberhinaus auch Ornamente in Form von durch Profilleisten gehaltenen Glasbauelementen. Die Türfüllung bildet demnach den Rahmen für die Glasbauelemente. Eine nach Art eines Sachdwichbauelementes gebaute Türfüllung besteht üblicherweise aus zwei Platten, beispielsweise aus Aluminium, die durch eine isolierende weiche Kernschicht, z.B. aus PU-Weichschaum, miteinander verbunden sind.

Verbindungselemente sind beispielsweise aus der DE-PS 39 36 400 bekannt. Hierbei ist ein Verbindungs- und ein Distanzstück vorgesehen, wobei dieses Verbindungs- und Distanzsstück zu beiden Seiten eindrehbare Verbindungselemente aufweist, wobei die Verbindungselemente jeweils ein hammerkopfartiges Verriegelungselement besitzen, das in eine entsprechende Nut der Profilleiste eingreift. Das Verbindungs- und Distanzsstück selbst greift ebenfalls zu beiden Seiten jeweils in die Nut der einen Profilleiste ein. Hierbei ist nachteilig, daß beispielsweise bei einem Wechsel einer Glasscheibe eines Glasbauelementes der Türfüllung die zu beiden Seiten der Türfüllung angeordneten Profilleisten gelöst werden müssen, d.h., beide Profilleisten gelöst werden müssen. Entsprechend groß ist der Aufwand beim Zusammenbau der Türfüllung. Zur Behebung dieses Nachteils ist es allerdings auch bekannt, die Profilleisten mit der Türfüllung zu verschrauben. Um zu verhindern, daß beim Verschrauben die Dichtung zwischen Türfüllung und Profilleiste zerstört wird, muß die Schraube schräg angesetzt werden. Das gesamte Vorgehen ist äußerst kompliziert und führt auch nicht immer zum gewünschten Erfolg, insbesondere dann nicht, wenn der Winkel der Schraube beim Einsetzen nicht richtig gewählt wird.

Der Erfindung liegt daher die Aufgabe zugrunde ein Verbindungselement zu schaffen, das es ermöglicht ein Glasbauelement auszutauschen, wobei nur die Profilleiste auf einer Seite der Türfüllung abgenommen werden muß.

Die Aufgabe wird erfindungsgemäß dadurch gelöst, daß das Verbindungselement ein insbesondere nach Art einer Zunge ausgebildetes Fixierungsglied aufweist, das in die Isolierschicht der Türfüllung einbringbar ist. Im einzelnen besteht das Verbindungselement aus zwei Verbindungsteilen, wobei das eine Verbindungsteil ein Gehäuse zur Aufnahme des anderen Verbindungsteiles aufweist, und wobei die Zunge an dem Gehäuse angeordnet ist. Hieraus folgt, daß durch Verdrehen des Gehäuses des einen Verbindungsteiles gegenüber dem anderen Verbindungsteil die Zunge in die Isolierschicht hineindrehbar ist. Hierbei ist die Zunge derart an dem Gehäuse angebracht, daß die Zunge mit ihrer einen Seite an der einen Platte, beispielsweise einem Aluminiumblech, anliegt, und dadurch die Profilleiste an die Platte angeklemmt gehalten wird. Zum Erleichtern des Eindrehens der Zunge in die Isolierschicht, beispielsweise aus PU-Weichschaum, ist die Zunge seitlich nach Art einer Schneide oder ähnlich ausgebildet.

Die Verbindung der Verbindungsteile mit den Profilleisten erfolgt durch ein an dem jeweiligen Verbindungsteil angeordnetes hammerkopfartiges Verriegelungsteil, wobei die Fixierung durch eine 90°-Drehung des Verriegelungsteils in der T-förmigen Nut erfolgt.

Der Aufbau des Verbindungselementes, bestehend aus den beiden Verbindungsteilen, stellt sich wie folgt dar. In dem Gehäuse des Verbindungsteiles ist ein zweiteiliger Kasten in Mehreckform eingesetzt, dessen Innenform zylindrisch ausgebildet ist, wobei das andere Verbindungsteil einen Zapfen aufweist, und von der Innenform formschlüssig erfaßbar ist.

Nach einer Ausführungsform besitzt die Innenform Innenrastrillen und der Zapfen Außenrastrillen zur Bildung einer rasterartig längenverstellbaren Rasterung, d.h., die Verbindung der beiden Verbindungsteile erfolgt durch Verschieben der Verbindungsteile ineinander. Die Rastverbindung ist hierbei derart, daß ein Lösen nur mit erheblichem Kraftaufwand möglich ist. Nach einer anderen Ausführungsform erfolgt die formschlüssige Verbindung zwischen Zapfen und Innenform des Gehäuses durch eine Gewindeverbindung. Dadurch, daß der zweiteilige Kasten insbesondere mit Spiel in dem Gehäuse des Verbindungsteiles einsitzt, wird erreicht, daß auch ein im Bereich Spitze unsauber ausgearbeiteter Zapfen des anderen Verbindungsteiles aufgenommen werden kann, weil die beiden Kastenteile seitlich ausweichen könnnen.

Die Verbindung von zwei gegenüberliegend angeordneten Profilleisten zur Fixierung eines Glasbauelementes in einer Türfüllung gestaltet sich in beiden Fällen derart, daß zunächst die beiden Verbindungsteile zu einer Länge zusammengefügt werden, die etwa der Dicke der Türfüllung entspricht. Hierbei erfolgt bei der Rastverbindung der beiden Verbindungsteile die Zusammenfügung derart, daß die beiden Teile einfach ineinander geschoben werden, wohingegen bei einer Gewindeverbindung das Zusammenfügen durch Drehen erfolgt. Im Folgenden wird dann das hammerkopfartige Verriegelungselement des einen Verbindungsteiles und die T-förmige Nut der einen Profilleiste eingebracht, das andere hammerkopfartige Verriegelungselementes in die T-förmige Nut der anderen Profilleiste, wobei die Fixierung des Verriegelungselementes mit dieser Profilleiste dadurch erfolgt, daß das Verriegelungselement um 90° verdreht wird. Zur Verdrehung besitzt dieses andere Verbindungsteil eine Mehreckplatte, die den Ansatz eines Werkzeuges ermöglicht.

Anhand der Zeichnungen wird die Erfindung nachstehend näher erläutert:
- Fig. 1: zeigt die Befestigung eines Glasbauelementes durch zwei Profilleisten in perspektivischer Darstellung;
- Fig. 2: ist eine perspektivische Darstellung des einen Verbindungsteiles;
- Fig. 3: zeigt den zweiteiligen Kasten in perspektivischer Darstellung;
- Fig. 4: zeigt den anderen Verbindungsteil in perspektivischer Darstellung;
- Fig. 5: ist ein Schnitt gemäß der Linie V - V in Fig. 1;
- Fig. 6: ist ein Schnitt gemäß der Linie VI - VI in Fig. 1.

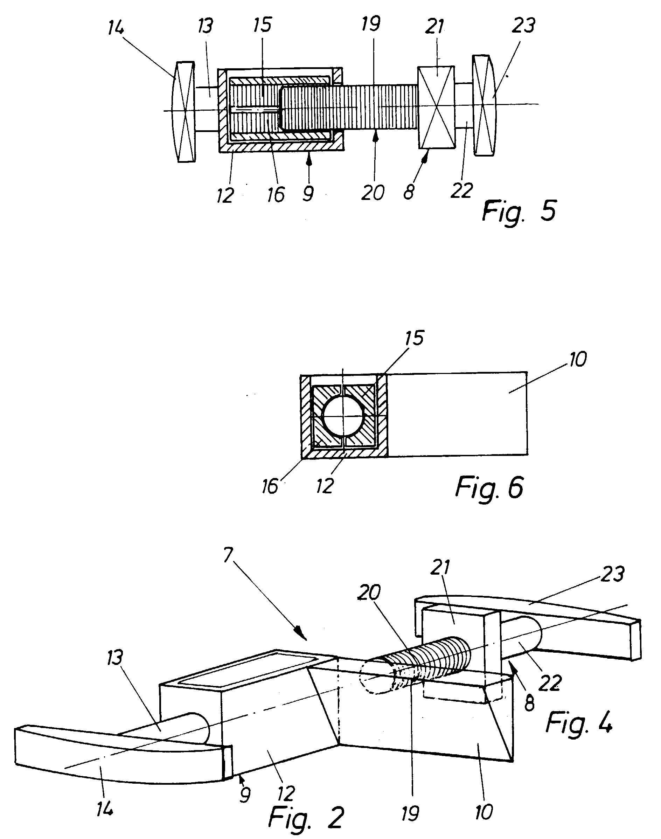

Die insgesamt mit 1 bezeichnete Türfüllung nimmt das Glasbauelement 2 auf; die Türfüllung selbst ist nach Art eines Sandwichbauelementes aufgebaut, bestehend aus dem beiden Aluminiumblechen 3, die durch eine Schicht aus weichem PU-Schaum 4 miteinander verbunden sind. Das Glasbauelement 2 besitzt die beiden Glasscheiben 2a, 2b, die im Bereich der Profilleisten 5, 11 durch einen Steg 6 voneinander getrennt gehalten sind. Die beiden Profilleisten 5, 11 sind durch das Verbindungselement 7 miteinander verbunden. Das Verbindungselement 7 besteht aus den beiden Verbindungsteilen 8 und 9, die längenverstellbar miteinander verbindbar sind (vgl. Fig. 2 u. 4, in denen die beiden Teile perspektivisch dargestellt sind). Der Verbindungsteil 9 besitzt im wesentlichen die Form eines Gehäuses 12, an das sich über ein Halsstück 13 das hammerkopfartige Verriegelungselement 14 anschließt, dessen Längsabmessungen in bekannter Weise größer ausgebildet sind als die Querabmessungen. In das Gehäuse 12, das im wesentlichen Quaderform aufweist, aber oben offen ist, wird ein zweiteiliger Kasten eingesetzt, der in Fig. 3 getrennt perspektivisch dargestellt ist. Die beiden Teile dieses Kastens sind mit 15 bzw. 16 bezeichent. Die Innenform eines jeden Teils dieses Kastens ist halbzylindrisch bei 17 bzw. 18 ausgebildet, so daß beim Zusammensetzen dieser beiden Teile die Innenform des Kastens zylindrisch ausgebildet ist, und einen Hohlzylinder darstellt. Die Innenwand dieses Hohlzylinders ist mit Innenrastrillen 18 versehen, so daß damit der Verbindungsteil 9 ein hohlzylinderförmiges Haft-oder Rastelement darstellt. Der andere Verbindungsteil 8 besitzt einen Zapfen 19, an dessen Umfang ebenfalls Rastrillen 20 angeordent sind, so daß damit ein Haftzapfen gebildet wird. Möglich ist allerdings nicht nur eine Verbindung der beiden Verbindungsteile 8, 9 mittels der oben beschriebenen Rasterung, sondern darüber hinaus auch mittels einer Gewindeverbindung. Hierbei sind dann die Innenrastrillen 18 bzw. die Rastrillen 20 des Zapfens 19 nach Art eines Gewindes geschnitten.

Der Verbindungsteil 8 ist mit einer Mehreckplatte 21 versehen, an die sich über ein Halsstück 22 das hammerkopfartige Verriegelungselement 23 anschließt.

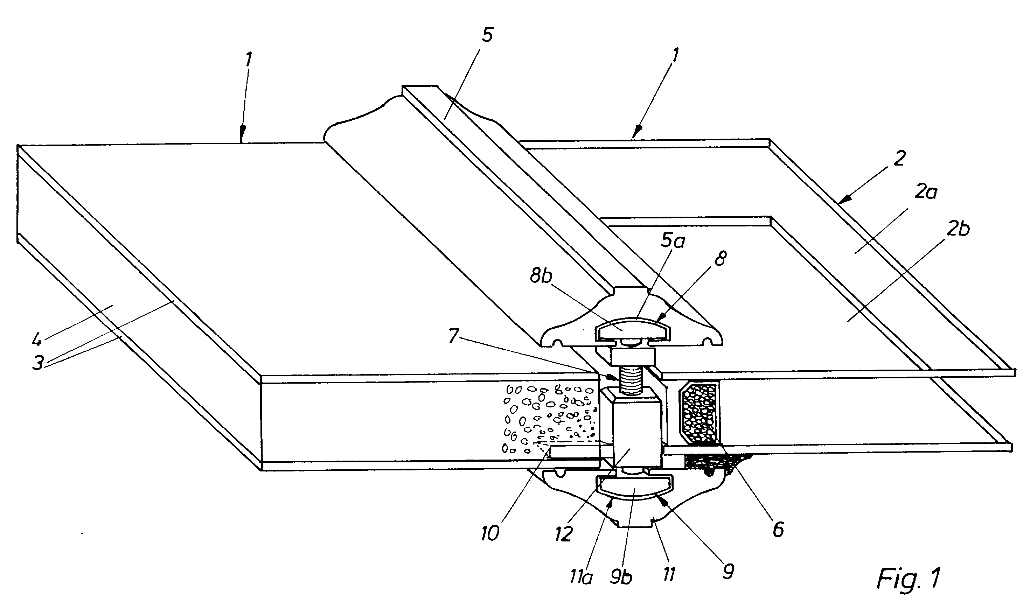

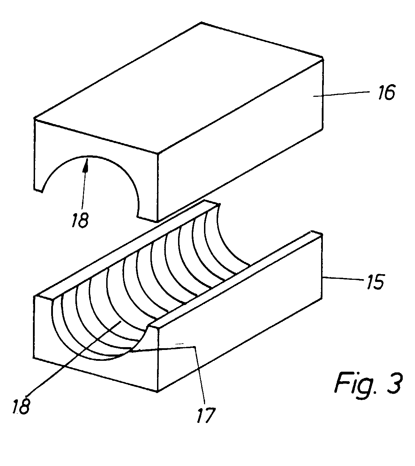

Aus Fig. 1 ist ersichtlich, daß die hammerkopfartigen Verriegelungselemente 14 und 23 in entsprechenden Nuten 5a bzw. 11a der Profilleisten 5 bzw. 11 einliegen. Durch die T-förmige Ausbildung der Nut 5a bzw. 11a ist es möglich, daß das hammerkopfartige Verriegelungselement mit seiner schmalen Querseite eingeführt und dann die Mehreckplatte 21 verdreht werden kann, so daß dadurch in bekannter Weise eine Verriegelung der beiden Profilleisten miteinander erfolgt` Sowohl durch eine Rastverbindung als auch durch eine Gewindeverbindung der beiden Verbindungsteile 8, 9 wird erreicht, daß bei abweichenden Dimensionen, insbesondere in bezug auf die Stärke der Türfüllung, ohne weiteres eine Anpassung des Verbindungselements an die vorhandenen Dimensionen ermöglicht wird, da das Verbindungselement 7 insgesamt längenverstellbar ausgebildet ist. Man braucht bei der einen Ausführungsform lediglich durch Druck auf die beiden Verbindungsteile bzw. auf die Profilleisten, bzw. bei der anderen Ausführungsform durch Drehen der beiden Verbindungsteile, den entsprechenden Abstand einzustellen und kann dann das Glasbauelement in der umgebenden Türfüllung fixieren.

An dem Gehäuse 12 befindet sich die Zunge 10, die, wie aus Fig. 1 ersichtlich, in die Isolierschicht der Türfüllung 1 eingedreht wird. Diese Zunge 10, die auf einer Seite schneidenähnlich ausgebildet ist, liegt unmittelbar an der unteren Aluminiumplatte 3 der Türfüllung 1 an. Hierdurch wird erreicht, daß selbst bei Lösen des Verbindungsteiles 8 und entsprechend der Profilleiste 5 die Profilleiste 11 und das Verbindungsteil 9 in ihrer ursprünglichen Stellung verharren, eben aufgrund der Tatsache, daß dieses Verbindungsteil 9 mit der daran angeordneten Profilleiste 11 durch Anlage der Zunge 10 an der Platte 3 gehalten wird. Hierdurch wird nicht nur der Austausch eines defekten Glaselementes 2 erleichtert, sondern es werden darüber hinaus auch die Fertigungszeiten bei der Montage eines Glasbauelements bzw. mehrerer Glasbauelemente in eine Türfüllung reduziert.

## Patentansprüche

1. Verbindungselement zum Verbinden von parallel liegenden Profilleisten (5, 11), welche in einer Ebene liegende Teile einer Türfüllung halten, wobei die Türfüllung nach Art eines Sandwichbauelementes mit zwei Platten (3), die durch eine Weiche Isolierschicht (4) verbunden sind aufgebaut ist,
**dadurch gekennzeichnet**, daß das Verbindungselement (7) ein Fixierungsglied (10) besitzt, das in die Isolierschicht (4) der nach Art eines Sandwichbauelementes aufgebauten Füllung einbringbar ist.

2. Verbindungselement nach Anspruch 1,
**dadurch gekennzeichnet**, daß das Fixierungsglied nach Art einer Zunge (10) ausgebildet ist.

3. Verbindungselement nach Anspruch 2,
**dadurch gekennzeichnet**, daß das Verbindungselement (7) aus zwei Verbindungsteilen (8, 9) besteht, wobei das eine Verbindungsteil (9) ein Gehäuse (12) zur Aufnahme des anderen Verbindungsteils (8) aufweist, wobei die Zunge (10) an dem Gehäuse (12) angeordnet ist.

4. Verbindungselement nach Anspruch 2,
**dadurch gekennzeichnet**, daß die Zunge (10) seitlich nach Art einer Schneide ausgebildet ist.

5. Verbindungselement nach Anspruch 2,
**dadurch gekennzeichnet**, daß die Zunge (10) mit ihrer einen Seite an der Innenseite der einen äußeren Platte (3) anliegt, und dadurch die Profilleiste (5, 11) an die äußere Platte (3) angeklemmt ist.

6. Verbindungselement nach Anspruch 3,
**dadurch gekennzeichnet**, daß die Profilleisten (5, 11) eine T-förmige Nut (5a, 11a) aufweisen.

7. Verbindungselement nach Anspruch 6,
**dadurch gekennzeichnet**, daß das Verbindungsteil (8, 9) ein hammerkopfartiges Verriegelungselement (14, 23) für die T-förmige Nut (5a, 11a) der Profilleisten (5, 11) aufweist.

8. Verbindungselement nach Anspruch 2
**dadurch gekennzeichnet**, in dem Gehäuse (12) des Verbindungsteils (9) ein zweiteiliger Kasten (15, 16) in Mehreckform eingesetzt ist, deren Innenform zylindrisch ausgebildet ist, wobei das andere Verbindungsteil (8) einen Zapfen (19) aufweist, der von der Innenform formschlüssig erfaßbar ist.

9. Verbidnungselement nach Anspruch 8
**dadurch gekennzeichnet**, daß die Innenform Innenrastrillen (18) und der Zapfen (19) Außenrastrillen (20) zur Bildung ein rasterartig längenverstellbaren Rastung aufweist.

10. Verbindungselement nach Anspruch 8
**dadurch gekennzeichnet**, daß die formschlüssige Verbindung zwischen Zapfen (19) und Innenform des Gehäuses (12) durch eine Gewindeverbindung erfolgt.

11. Verbindungselement nach Anspruch 8
**dadurch gekennzeichnet**, daß das andere Verbindungsteil (8) eine Mehreckplatte (21) aufweist, die ein Verdrehen dieses Verbindungsteils (8) ermöglicht.

## Claims

1. Connecting element for parallel section members (5, 11), holding the elements of a door-panel being located on one level, whereas the door-panel is made sandwich-like of two plates (3), connected with a soft insulating layer (4),
**characterized in that**
the connecting element (7) has a fixing member (10), which can be inserted into the insulating layer (4) of the sandwich-like built door-panel.

2. Connecting element according to claim 1,
**characterized in that**
the fixing member is designed like a tongue (10).

3. Connecting element according to claim 2,
**characterized in that**
the connecting element (7) consists of two connecting parts (8, 9), whereas one of the connecting parts (9) has a housing (12) for receiving the other connecting part (8), whereas the tongue (10) is arranged onto the housing (12).

4. Connecting element according to claim 2,
**characterized in that**
the tongue (10) has its side designed as an edge.

5. Connecting element according to claim 2,
**characterized in that**
the tongue (10) is adjacent on one side to the inner side of one of the outer plates (3) and that thus the section member (5, 11) is clamped onto the outer plate (3).

6. Connecting element according to claim 3,
**characterized in that**
the section members (5, 11) have a T-shaped groove (5a, 11a).

7. Connecting element according to claim 6,
**characterized in that**
the connecting part (8, 9) has a T-head locking element (14, 23) for the T-shaped groove (5, 11a) of the section members (5, 11).

8. Connecting element according to claim 2,
**characterized in that**
a polygonal bipartite box (15, 16) is inserted in the housing (12) of the connecting part (9), whose inner shape is cylindrical, whereas the other connecting part (8) has a plug (19) that fits closely into the inner part.

9. Connecting element according to claim 8,
**characterized in that**
the inner form has inner snap grooves (18) and the plug (19) outer snap grooves (20) constituting thus a longitudinally adjustable locking frame.

10. Connecting element according to claim 8,
**characterized in that**
the close-fitting connection between plug (19) and inner shape of the housing (12) is achieved by means of a thread-connection.

11. Connecting element according to claim 8
**characterized in that**
the other connecting part (8) has a polygonal plate (21), which enables the torsion of this connecting part (8).

## Revendications

1. Elément de liaison pour profilés parallèles (5, 11) maintenant les parties d'un panneau de porte situées à un même niveau, le panneau de porte étant un panneau-sandwich constitué de deux plaques (3) reliées par une couche isolante souple,
**caractérisé en ce que**
l'élément de liaison (7) possède un membre de fixation (10) qui peut être inséré dans la couche isolante du panneau-sandwich.

2. Elément de liaison selon la revendication 1,
**caractérisé en ce que**
le membre de fixation a la forme d'une languette (10).

3. Elément de liaison selon la revendication 2,
**caractérisé en ce que**
l'élément de liaison (7) comprend deux parties de liaison (8, 9), l'une des parties de liaison étant pourvue d'un boîtier (12) recevant l'autre partie de liaison (8), la languette (10) étant placée sur le boîtier (12).

4. Elément de liaison selon la revendication 2,
**caractérisé en ce que**
la languette (10) a, sur le côté, la forme d'une lame.

5. Elément de liaison selon la revendication 2,
**caractérisé en ce qu'**
un côté de la languette (10) est adjacent au côté intérieur de la plaque externe (3), fixant ainsi le profilé (5, 11) à la plaque externe (3).

6. Elément de liaison selon la revendication 3,
**caractérisé en ce que**
les profilés (5, 11) possèdent une rainure en forme de T (5a, 11a).

7. Elément de liaison selon la revendication 6,
**caractérisé en ce que**
la partie de liaison (8, 9) possède un élément de verrouillage (14, 23) pour la rainure en forme de T (5a, 11a) des profilés (5, 11).

8. Elément de liaison selon la revendication 2,
**caractérisé en ce qu'**
une boîte bipartite (15, 16) de forme polygonale est insérée dans le boîtier (12) de la partie de liaison (9), la forme interne de la boîte étant cylindrique et l'autre partie de liaison (8) étant un bouchon (19) s'emboîtant parfaitement dans la forme interne.

9. Elément de liaison selon la revendication 8,
**caractérisé en ce que**
la forme interne possède des rainures d'arrêt internes (18) et que le bouchon (19) possède des rainures d'arrêt externes (20), formant ainsi un cran d'arrêt ajustable dans la longueur.

10. Elément de liaison selon la revendication 8,
**caractérisé en ce que**
l'emboîtement du bouchon (19) dans la forme interne du boîtier (12) est garanti par un assemblage à manchon taraudé.

11. Elément de liaison selon la revendication 8,
**caractérisé en ce que**
l'autre partie de liaison (8) possède une plaque polygonale (21) permettant une torsion de cette partie de liaison (8).
